# EUROPÄISCHE PATENTSCHRIFT

(11) **EP 2 233 384 B1**
(45) Veröffentlichungstag und Bekanntmachung des Hinweises auf die Patenterteilung: **01.01.2014**
(21) Anmeldenummer: 10002548.5
(22) Anmeldetag: 11.03.2010
(51) Int. Cl.: B62D 5/04

(54) **Verfahren zum Bereitstellen einer Information über den Betriebszustand eines Lenkungssystems**
Method for providing information about the operational status of a steering system
Procédé de préparation d'une information sur l'état de fonctionnement d'un système de direction

(30) Priorität: 14.03.2009 DE 102009013246
(43) Veröffentlichungstag der Anmeldung: 29.09.2010
(73) Patentinhaber: Audi AG, 85045 Ingolstadt (DE)
(72) Erfinder: Ullmann, Stefan, 80797 München (DE); Stemmer, Martin, 85445 Niederding (DE)
(74) Vertreter: Patzelt, Heike Anna Maria

(56) Entgegenhaltungen:
- EP-A2- 0 325 148
- WO-A1-2008/055512
- FR-A1- 2 864 715
- US-A1- 2003 204 294

## Beschreibung

Die Erfindung betrifft ein Verfahren zum Bereitstellen einer Information über den Betriebszustand eines Lenkungssystems in einem Kraftfahrzeug, wobei das Lenkungssystem eine eine Hilfskraft bereitstellende Einheit mit einem Elektromotor aufweist. Man spricht bezüglich dieser Einheit auch von einer Hilfskraftlenkung oder Servolenkung.

Eine Hilfskraftlenkung ist in ihrer Leistungsfähigkeit naturgemäß nach oben hin begrenzt. Wird der Hilfskraftlenkung zuviel Leistung abverlangt, kann sie Schaden nehmen.

Aus der EP 1 772 349 A2 ist ein Verfahren zum Betreiben einer elektrischen Hilfskraftlenkung bekannt, in dem für den Fall, dass ein gelenktes Rad an einem festen Hindernis anschlägt, die bereitgestellte Hilfskraft durch einen Elektromotor reduziert wird, damit das System keinen Schaden nimmt.

Das hierbei verwendete Konzept, zunächst einen Zustand erhöhter Belastung für die Hilfskraftlenkung zu erfassen und dann die Belastung zu reduzieren, weist den Nachteil auf, dass ein Schadensfall schon eingetreten sein könnte, bevor eine Reaktion des Systems überhaupt erfolgt wäre.

Insbesondere bei Wechselwirkung der die Hilfskraft bereitstellenden Einheit mit anderen Systemen können extreme Anforderungen bestehen. Beispielsweise ist es bekannt, zusätzlich zu der Hilfskraftlenkung eine Überlagerungslenkung vorzusehen. Hierbei ist eine mit einer Lenkhandhabe gekoppelte Welle in ein Überlagerungsgetriebe als Eingang geführt, an dessen Ausgang eine Welle zur Hilfskraft bereitstellenden Einheit hin vorgesehen ist. Es gibt eine weitere Welle als zusätzlichen Eingang, und über diese Welle kann ein Elektromotor einen zusätzlichen Lenkwinkel aufprägen. Kommt die die Hilfskraft bereitstellende Einheit an ihre Belastungsgrenze, wäre es sinnvoll, eine Änderung im Betrieb der Überlagerungslenkung vorzusehen. Hierzu müsste eine entsprechende Information bereitgestellt werden.

Es wäre daher wünschenswert, wäre ein Verfahren zum Bereitstellen einer Information über den Betriebszustand eines Lenkungssystems in einem Kraftfahrzeug bekannt, insbesondere betreffend den Betriebszustand der eine Hilfskraft bereitstellenden Einheit des Lenkungssystems. Hierbei wäre insbesondere eine solche Information von Interesse, die durch andere Einheiten unmittelbar zu offenbaren.

Aus der US 2003/0204294 A1 ist ferner ein Verfahren bekannt, bei welchem die aktuell von einer Hilfskraftlenkung benötigte Leistung bzw. ein Erwartungswert für eine zukünftig benötigte Leistung bestimmt wird, so dass der Leistungsbedarf anderer Kraftwagenkomponenten angepasst werden kann.

Somit ist es Aufgabe der Erfindung, ein Verfahren zum Bereitstellen einer Information über den Betriebszustand eines Lenkungssystems der eingangs beschriebenen Art in einem Kraftfahrzeug zu offenbaren.

Die Aufgabe wird durch ein Verfahren mit den Merkmalen gemäß Patentanspruch 1 gelöst.

Erfindungsgemäß wird eine aktuell von der die Hilfskraft bereitstellenden Einheit bereitgestellte Leistung ermittelt, oder auch die Leistung ermittelt, die aufgrund von Anforderungen (äußeren Umständen und Zuständen sowie Anforderungssignalen) bereitzustellen ist, oder die bereitzustellen wäre und nicht bereitgestellt werden kann. Aus der ermittelten aktuell bereitgestellten oder bereitzustellenden Leistung wird unter Berücksichtigung einer maximal bereitstellbaren Leistung eine maximal mögliche oder notwendige Änderung der Drehzahl ermittelt.

Es wird somit eine Information über eine (positive oder negative) Drehzahlreserve bereitgestellt. Die Drehzahlreserve ist eine besonders aussagekräftige Information, denn die Drehzahl ist ein Maß dafür, mit welcher Schnelligkeit die Lenkung betätigt wird. Die Drehzahlreserve ist somit ein Maß für die mögliche Schnelligkeitsänderung. Die Erfindung stellt erstmals eine Information zu einer eine Hilfskraft bereitstellenden Einheit bereit, die eine Aussage über noch bestehende Möglichkeiten macht. Insofern ist das Verfahren gewissermaßen prädiktiv, also vorhersagend. Im Fall, dass durch die Prädiktion ersichtlich ist, dass das Lenkungssystem an seine Leistungsgrenze kommt, kann schon im Vorfeld (insbesondere durch andere Systeme) entgegengesteuert werden, so dass die Leistungsgrenze nicht überschritten wird.

Die aktuell von der Einheit bereitgestellte Leistung kann ganz einfach dadurch ermittelt werden, dass die von dem Elektromotor abgegriffene Spannung mit dem über den Elektromotor fließenden Strom multipliziert wird: Die Leistung, die der Elektromotor aufnimmt, wird als von der Einheit bereitgestellte Leistung angesehen. Sofern nicht ohnehin vorhanden, werden geeignete Mittel zum Messen der Größen Spannung und Strom bereitgestellt.

Die maximal bereitstellbare Leistung kann ein fester Wert sein, der der Einheit zugeordnet ist. Allerdings würde man hierbei nicht berücksichtigen, dass die maximal bereitstellbare Leistung in der Realität schwankt; man müsste als festen Wert einen unteren Wert für die maximal bereitstellbare Leistung wählen. Damit eine optimale Ausnutzung des Systems ermöglicht ist, sollte tatsächlich die maximal bereitstellbare Leistung als aktueller Wert ermittelt werden.

Die maximal bereitstellbare Leistung lässt sich insbesondere (unter Berücksichtigung der konstruktiven Gegebenheiten) aus der von einem Bordnetz des Kraftfahrzeugs aktuell bereitgestellten Spannung ermitteln, welche schwanken kann. Auch die aktuelle Temperatur kann berücksichtigt werden, denn diese bestimmt den Betriebszustand des Elektromotors.

Die maximal mögliche Änderung der Drehzahl sollte ein Maß für die maximal noch mögliche Änderung der Leistung sein. Somit ist es nahe liegend, sie aus einer Differenz der maximal bereitstellbare Leistung und der aktuell bereitgestellten oder bereitzustellenden Leistung zu ermitteln. Die Leistungsreserve ist das Produkt aus Drehzahlreserve und aktuellem Drehmoment, so dass die maximal mögliche Änderung der Drehzahl aus besagter Differenz ermittelt werden kann, indem diese Differenz durch das aktuell von dem Motor aufgebrachte Drehmoment dividiert wird.

Das aktuell von dem Motor aufgebrachte Drehmoment muss bei dem Verfahren nicht numerisch als Zahlenwert ermittelt werden. Vielmehr ergibt sich dieses Drehmoment seinerseits aus der aktuell bereitgestellten Leistung, wenn diese durch die aktuelle Drehzahl dividiert wird. Die aktuelle Drehzahl kann durch einen Winkelgeber ermittelt werden. Insofern, als das Drehmoment bei einem erfindungsgemäßen Verfahren berücksichtigt wird, lassen sich in entsprechende Gleichungen auch unmittelbar diejenigen Größen, aus denen das aktuell aufgebrachte Drehmoment abgeleitet wird, einsetzen, also eben die aktuell bereitgestellte Leistung und die aktuelle Drehzahl.

Das Verfahren zum Bereitstellen einer Information hat besonderen Sinn dann, wenn diese Information auch genutzt wird. Somit wird bevorzugt die Information einem System zugeleitet, das dazu ausgelegt ist, bei Mitteilung von Werten für die maximal mögliche Änderung der Drehzahl aus einem vorbestimmten Werteintervall seinen Betriebszustand zu ändern. Unterschreitet die maximal mögliche Änderung der Drehzahl beispielsweise einen vorbestimmten Schwellwert, kann das System darauf hinwirken, dass die die Hilfskraft bereitstellende Einheit mit einem kleineren Lenkwinkel beaufschlagt wird. Dies kann auch über einen zeitlichen Verlauf ständig oder wiederholt erfolgen.

Bereits oben war genannt worden, dass als solches System insbesondere eine Überlagerungslenkung infrage kommt, bei der ein Elektromotor dem Lenkungssystem über ein Überlagerungsgetriebe einen zu dem von einem Fahrzeugführer über eine Lenkhandhabe eingelenkten Lenkwinkel zusätzlichen Lenkwinkel aufprägt. Das Überlagerungsgetriebe kann hier als Planetengetriebe oder als Wellgetriebe ausgebildet sein.

Die Änderung des Betriebszustands des Systems kann in diesem Fall insbesondere eine Änderung im zusätzlichen aufgeprägten Lenkwinkel bei ansonsten gleichen Betriebsbedingungen zur Folge haben. Der Lenkwinkel kann insbesondere so geändert werden, dass der Elektromotor der Hilfskraftlenkung weniger belastet wird und daher seine Leistungsgrenze nicht erreicht beziehungsweise nicht überschreitet.

Nachfolgend wird eine bevorzugte Ausführungsform der Erfindung unter Bezug auf die Zeichnung beschrieben, in der
- Fig. 1: schematisch die zur Beschreibung der Erfindung wesentlichen Bauteile eines Kraftfahrzeugs zeigt und
- Fig. 2: eine Kennlinie für den Elektromotor einer Hilfskraftlenkung des erfindungsgemäßen Fahrzeugs zeigt.

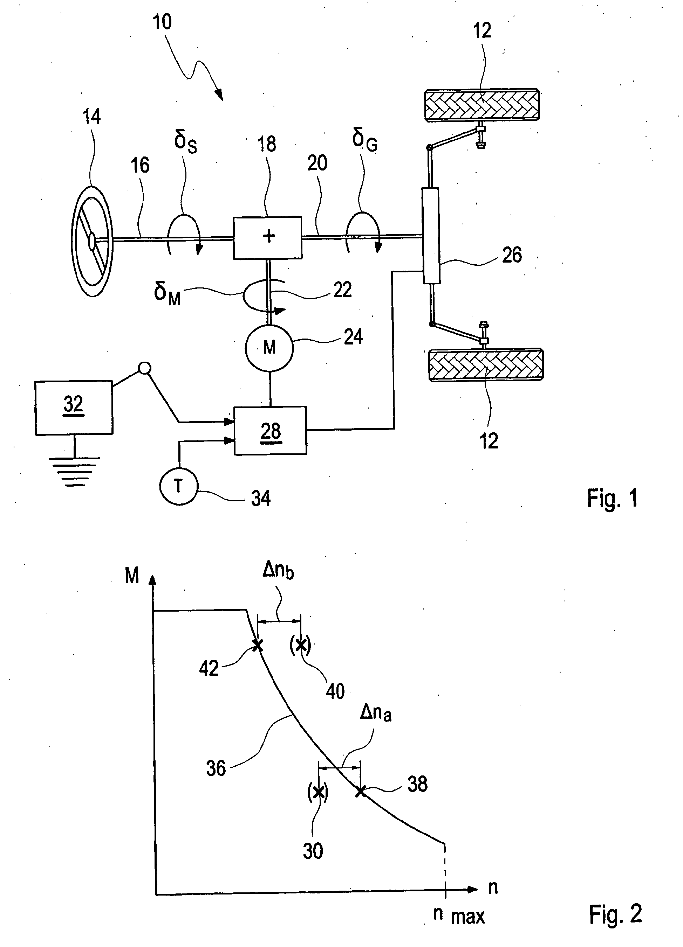

In einem im Ganzen mit 10 bezeichneten Kraftfahrzeug werden Räder 12 vermittels eines Lenkrads 14 als Lenkhandhabe gedreht. Das Lenkrad 14 ist mit einer ersten Welle 16 gekoppelt, der das Lenkrad 14 eine Drehung um einen Winkel δ_{S} aufprägt. Der ersten Welle 16 ist ein so genanntes Überlagerungsgetriebe 18 nachgeordnet. Ausgangsseitig des Getriebes ist eine zweite Welle 20 in Richtung zu den Rädern 12 geführt. Das Überlagerungsgetriebe 18 zeichnet sich dadurch aus, dass eine dritte Welle 22 in es hineingeführt ist und einen zweiten Eingang bildet. Ein Elektromotor 24 kann der dritten Welle 22 einen Drehwinkel δ_{M} aufprägen. Das Überlagerungsgetriebe 18 erzeugt dann ausgangsseitig einen Winkel δ_{G}, um den sich die zweite Welle 20 dreht, der eine Funktion der Eingangswinkel δ_{S} und δ_{M} ist, typischerweise durch Addition aus diesen beiden Winkeln hervorgeht. Die Überlagerungslenkung erlaubt es, vermittels des Elektromotors 24 den Fahrzeugführer bei der Lenkung zu unterstützen, nämlich der zweiten Welle 20 einen größeren oder kleineren Winkel aufzuprägen, als dies der Fahrzeugführer 14 allein tut. In dem Kraftfahrzeug 10 ist der zweiten Welle 20 eine eine Hilfskraft bereitstellende Einheit 26 nachgeordnet. Man bezeichnet die Gesamtheit auch als Hilfskraftlenkung oder Servolenkung. Die Einheit 26 umfasst einen in Fig. 1 nicht einzeln gezeigten Elektromotor mit Stator und Rotor. Vermittels dieses Elektromotors wird dem Fahrzeugführer 14 das Drehen der Räder 12 erleichtert.

Die Erfindung bezieht sich auf ein Kraftfahrzeug mit einer eine Hilfskraft bereitstellenden Einheit 26 und wird vorliegend unter Bezug auf das Kraftfahrzeug 10 beschrieben, weil sie insbesondere sinnvoll eingesetzt wird, wenn es eine Überlagerungslenkung wie bei einem Kraftfahrzeug 10 gibt. Kommt nämlich zu dem vom Fahrzeugführer über die Lenkhandhabe 14 eingebrachten Winkel δ_{S} der zusätzliche Winkel δ_{M} hinzu, kann bei schnellen Lenkvorgängen und hohen von dem Elektromotor in der Einheit 26 aufzubringenden Momenten mit erhöhter Wahrscheinlichkeit eine Überlastung des Elektromotors eintreten.

Dies soll vermieden werden. Hierzu wird eine Information an eine Steuereinheit 28 bereitgestellt, die den Elektromotor 24 der Überlagerungslenkung steuert.

Zu dem Elektromotor der Einheit 26 lässt sich ermitteln, bei welcher anliegenden Spannung U er welche Stromstärke I zu seinem Betrieb benötigt. Die von dem Elektromotor aufgebrachte Leistung ergibt sich somit als Pᵢₛₜ = U · I. Gleichzeitig lässt sich die Drehzahl nᵢₛₜ durch einen (in der Figur nicht gezeigten) Lagegeber beziehungsweise Inkrementengeber am Rotor des Elektromotors ermitteln. Daraus lässt sich das von dem Elektromotor aufgebrachte Moment Mᵢₛₜ ableiten gemäß Mᵢₛₜ = Pᵢₛₜ : nᵢₛₜ.

Der Betriebspunkt, den der Elektromotor einnimmt, ist daher bekannt. Vorliegend sei der Betriebspunkt durch Drehzahl n und Moment M festgelegt. Ein solcher Betriebspunkt ist in Fig. 2 gezeigt und mit 30 bezeichnet. Nun lässt sich situativ abhängig ermitteln, welche Leistung der Motor unter den vorherrschenden Bedingungen maximal erbringen kann. Hierzu gibt es eine Kennlinie für die Leistungsgrenze im n-M-Diagramm. Vorliegend kann bei Auswahl der Kennlinie berücksichtigt werden, dass die maximale Leistungsfähigkeit des Elektromotors von der Bordnetzspannung eines Bordnetzes 32 im Kraftfahrzeug 10 abhängig ist. Diese Bordnetzspannung wird der Steuereinheit 28 zugeführt. Genauso ist die Leistungsfähigkeit auch von der Temperatur abhängig, welche durch einen Sensor 34 ermittelbar ist, der mit der Steuereinheit 28 gekoppelt ist.

Die Steuereinheit 28 kann in Abhängigkeit von der Bordnetzspannung und der Temperatur dann aus einem Kennlinienfeld eine Kennlinie auswählen, und eine solche Kennlinie ist in Fig. 2 beispielhaft gezeigt und mit 36 bezeichnet.

Aus der Kennlinie für die Leistungsgrenze ergibt sich, dass der Betriebspunkt 30 so liegt, dass die Leistung des Elektromotors bei gleicher Drehzahl noch gesteigert werden könnte, wenn sich das Moment erhöhen würde. Insbesondere aber gibt es noch eine Drehzahlreserve Δnₐ: Der Betriebspunkt 30 kann sich bis zu einem theoretischen Betriebspunkt 38 verschieben, bei dem genau die Leistungsgrenze des Elektromotors erreicht wird.

Diese Drehzahlreserve Δnₐ wird durch die Steuereinheit 28 ermittelt.

Es gibt auch die Situation, dass der Elektromotor bereits überlastet ist. Dann gibt ein in Fig. 1 nicht gezeigtes Steuergerät in der Einheit 26 einen Betriebspunkt vor, der dann allerdings nicht tatsächlich eingenommen wird. Der tatsächlich eingenommene Betriebspunkt ist der Betriebspunkt 42. Es gibt dann eine negative Drehzahlreserve Δn_{b}, die angeforderte Drehzahl ist also um den Wert Δn_{b} im Vergleich zu der eigentlich maximal möglichen Drehzahl zu hoch, es gibt somit eine nötige negative Änderung der Drehzahl.

Die Steuereinheit 28 kann in der Folge den Elektromotor 24 in Abhängigkeit von der durch sie ermittelten Drehzahlreserve (Δnₐ oder - Δn_{b}) anpassen. Insbesondere, wenn eine Überlastung des Motors der Einheit 26 bevorsteht oder gar schon eingetreten ist, kann der Zusatzwinkel δ_{M} verkleinert werden. Insofern kann die Steuereinheit 28 ihren Betriebszustand im Vergleich zu einem herkömmlichen Betriebszustand ändern: Die Abhängigkeit von δ_{M} von der Größe δ_{S} ändert sich.

Das Ermitteln der Drehzahlreserve kann auch in einer von der Steuereinheit 28 verschiedenen Einrichtung durchgeführt werden und an die Steuereinheit 28 für den Elektromotor 24 übermittelt werden, z. B. kann die Einheit 26 ein Steuergerät umfassen, das die Drehzahlreserve ermittelt.

Eine Information über die Drehzahlreserve kann auch alternativ oder zusätzlich durch andere Systeme genutzt werden, beispielsweise kann ein Bremsassistenzsystem in Abhängigkeit von der ihm zugeführten Information über die Drehzahlreserve in bestimmter Weise aktiv werden.

Das Bereitstellen der Information "Drehzahlreserve" kann durch Übermittlung von Signalen von einer (Steuer-) Einheit zu einer anderen (Steuer-) Einheit erfolgen, die Information kann jedoch auch intern in einer Datenverarbeitungseinrichtung durch einen Softwarebaustein zur Nutzung durch einen anderen Softwarebaustein bereitgestellt sein (im Arbeitsspeicher der Datenverarbeitungseinrichtung oder sonst wie).

Die Temperatur kann statt durch einen Sensor 34 gemessen zu werden auch aus anderen Größen (Energieverbrauch des Motors, Umgebungstemperatur) abgeschätzt werden.

Anstatt eines Kennlinienfelds kann auch eine mathematische Vorschrift verwendet werden.

## Patentansprüche

1. Verfahren zum Bereitstellen einer Information über den Betriebszustand eines Lenkungssystems in einem Kraftfahrzeug (10), wobei das Lenkungssystem eine eine Hilfskraft bereitstellende Einheit (26) mit einem Elektromotor aufweist, bei dem eine aktuelle von der Einheit bereitgestellte oder aufgrund von Anforderungen bereitzustellende Leistung ermittelt wird,
**dadurch gekennzeichnet, dass**
daraus unter Berücksichtigung einer maximal bereitstellbaren Leistung eine maximal mögliche oder bei einer Überlastung des Elektromotors nötige Änderung (Δnₐ, Δn_{b}) der Drehzahl des Elektromotors ermittelt wird.

2. Verfahren nach Anspruch 1, bei dem die aktuell von der Einheit (26) bereitgestellte Leistung aus der von dem Elektromotor abgegriffenen Spannung und dem über den Elektromotor fließenden Strom ermittelt wird.

3. Verfahren nach Anspruch 1 oder 2, bei dem die maximal bereitstellbare Leistung als aktueller Wert ermittelt wird.

4. Verfahren nach Anspruch 3, bei dem die maximal bereitstellbare Leistung auch aus der von einem Bordnetz (32) des Kraftfahrzeugs (10) aktuell bereitgestellten Spannung und/oder der aktuellen Temperatur ermittelt wird.

5. Verfahren nach einem der vorhergehenden Ansprüche, bei dem die maximal mögliche Änderung der Drehzahl aus einer Differenz der maximal bereitstellbaren Leistung und der aktuell bereitgestellten oder bereitzustellenden Leistung einerseits und aus dem aktuell von dem Motor aufgebrachten Drehmoment andererseits ermittelt wird.

6. Verfahren nach einem der Ansprüche 3 bis 5, bei dem sich das aktuell aufgebrachte Drehmoment aus der aktuell bereitgestellten Leistung und einer durch einen Winkelgeber ermittelten aktuellen Drehzahl ergibt.

7. Verfahren nach einem der vorhergehenden Ansprüche, bei dem die Information einem System zugeleitet wird, das dazu ausgelegt ist, bei Mitteilung von Werten für die maximal mögliche Änderung der Drehzahl aus einem vorbestimmten Werteintervall seinen Betriebszustand zu ändern.

8. Verfahren nach Anspruch 7, bei dem das System eine Überlagerungslenkung umfasst, bei der ein Elektromotor (24) dem Lenkungssystem über ein Überlagerungsgetriebe (18) einen zu dem von einem Fahrzeugführer über eine Lenkhandhabe (14) eingeleiteten Lenkwinkel (δ_{S}) zusätzlichen Lenkwinkel (δ_{M}) aufprägt.

9. Verfahren nach Anspruch 8, bei dem eine Änderung des Betriebszustands des Systems (28) eine Änderung im zusätzlichen aufgeprägten Lenkwinkel (δ_{M}) bei ansonsten gleichen Betriebsbedingungen zur Folge hat.

## Claims

1. Method for providing information about the operational status of a steering system in a motor vehicle (10), the steering system comprising a unit (26) providing power assistance and having an electric motor, a current power provided by the unit or a power to be provided according to requirements being determined, **characterised in that** a maximum possible change (Δnₐ, Δn_{b}) in the rotational speed of the electric motor or a change therein required in the event of the electric motor being overloaded is determined therefrom, taking into account a maximum power which can be provided.

2. Method according to claim 1, wherein the power currently provided by the unit (26) is determined from the voltage tapped from the electric motor and the current flowing through the electric motor.

3. Method according to either claim 1 or claim 2, wherein the maximum power which can be provided is determined as a current value.

4. Method according to claim 3, wherein the maximum power which can be provided is also determined from the voltage currently provided by an on-board power supply (32) of the motor vehicle (10) and/or from the current temperature.

5. Method according to any of the preceding claims, wherein the maximum possible change in the rotational speed is determined from a difference between the maximum power which can be provided and the power currently provided or to be provided on the one hand, and from the torque currently applied by the motor on the other hand.

6. Method according to any of claims 3 to 5, wherein the currently applied torque results from the currently provided power and a current rotational speed determined by an angle transmitter.

7. Method according to any of the preceding claims, wherein the information is supplied to a system which is configured to change the operational status thereof when communicating values for the maximum possible change in the rotational speed from a predetermined value interval.

8. Method according to claim 7, wherein the system comprises a superimposed steering system, in which an electric motor (24) superimposes a steering angle (δ_{M}) on the steering system via a superimposed transmission (18) in addition to the steering angle (δ_{S}) introduced by a motor vehicle driver via a steering handle (14).

9. Method according to claim 8, wherein changing the operational status of the system (28) results in a change in the additional superimposed steering angle (δ_{M}) under otherwise identical operating conditions.

## Revendications

1. Procédé de génération d'une information sur l'état de fonctionnement d'un système de direction dans un véhicule automobile (10), dans lequel le système de direction présente une unité génératrice de force auxiliaire (26) avec un moteur électrique, dans lequel une puissance courante générée par l'unité ou à générer en raison des exigences est déterminée,
**caractérisé en ce que** :
on détermine à partir de là, en tenant compte d'une puissance maximale susceptible d'être générée, une modification (Δnₐ, Δn_{b}) maximale possible ou nécessaire, lors d'une surcharge du moteur électrique, de la vitesse de rotation du moteur électrique.

2. Procédé selon la revendication 1, dans lequel la puissance générée couramment par l'unité (26) est déterminée à partir de la tension prélevée du moteur électrique et du courant s'écoulant via le moteur électrique.

3. Procédé selon la revendication 1 ou la revendication 2, dans lequel la puissance maximale susceptible d'être générée est déterminée comme valeur courante.

4. Procédé selon la revendication 3, dans lequel la puissance maximale susceptible d'être générée est également déterminée à partir de la tension couramment générée par un réseau de bord (32) du véhicule automobile (10) et/ou de la température courante.

5. Procédé selon l'une quelconque des revendications précédentes, dans lequel la modification maximale possible du nombre de tours est déterminée à partir d'une différence de la puissance maximale susceptible d'être générée et de la puissance couramment générée ou à générer, d'une part, et du couple de torsion appliqué couramment par le moteur, d'autre part.

6. Procédé selon l'une quelconque des revendications 3 à 5, dans lequel le couple de torsion couramment appliqué est obtenu à partir de la puissance générée couramment et d'un nombre de tours courant déterminé par un capteur angulaire.

7. Procédé selon l'une quelconque des revendications précédentes, dans lequel l'information est acheminée à un système qui est conçu de manière à, lors de la communication de valeurs pour la modification maximale possible du nombre de tours, modifier son état de fonctionnement à partir d'un intervalle de valeurs prédéterminé.

8. Procédé selon la revendication 7, dans lequel le système comprend une direction de superposition, dans lequel un moteur électrique (24) applique au système de direction via une transmission de superposition (18) un angle de direction (δ_{M}) qui s'ajoute à l'angle de direction (δ_{S}) induit par un conducteur de véhicule via un volant de direction (14).

9. Procédé selon la revendication 8, dans lequel une modification de l'état de fonctionnement du système (28) entraîne une modification de l'angle de direction (δ_{M}) appliqué en plus dans des conditions de fonctionnement autrement similaires.
